# EUROPEAN PATENT APPLICATION

(11) **EP 4 730 492 A1**
(43) Date of publication of application: **22.04.2026**
(21) Application number: 25738899.1
(22) Date of filing: 07.01.2025
(51) Int. Cl.: H01M 10/658, H01M 10/0585

(54) **SECONDARY BATTERY INCLUDING INSULATION MATERIAL**

(30) Priority: 08.01.2024 KR 20240003157
(71) Applicant: LG Energy Solution, Ltd., Seoul 07335 (KR)
(72) Inventor: KIM, Kyoung Ho, Daejeon 34122 (KR); LEE, Su Rim, Daejeon 34122 (KR); PARK, Junsoo, Daejeon 34122 (KR)
(74) Representative: Plasseraud IP
(86) International application number: PCT/KR2025/000273
(87) International publication number: WO 2025/150825

(57) **Abstract**

According to an embodiment of the present disclosure, there is provided a secondary battery comprising: an electrode assembly containing a positive electrode, a negative electrode and a separator, and an electrolyte,
wherein the electrode assembly includes two or more unit cells, and one or more thermal insulators, and
wherein one or more of the one or more thermal insulators are located between the two or more unit cells.

## Description

### [TECHNICAL FIELD]

### Cross-Reference to Related Application(s)

This application claims priority to and the benefit of Korean Patent Application No. 10-2024-0003157, filed on January 8, 2024, with the Korean Intellectual Property Office, the disclosure of which is incorporated herein by reference in its entirety.

The present disclosure relates to a secondary battery including a thermal insulator.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Generally, a lithium secondary battery includes a positive electrode, a negative electrode, a separator interposed between the positive electrode and the negative electrode, an electrolyte, an organic solvent, and the like. Because the positive electrode can generate oxygen due to its unstable structure in a charged state, and there is a high risk of ignition when oxygen is generated, there has been an attempt to research and develop methods that can improve the stability of lithium secondary batteries.

One of the important safety items in the safety evaluation of such lithium secondary batteries is the thermal propagation test. Such a thermal propagation test confirms whether the lithium secondary battery can withstand for 5 minutes or more in a module or pack unit without causing ignition. However, as the demand for high capacity and high energy density has increased in recent years, it has become difficult for lithium secondary batteries using Ni-excess and Ni-based positive electrode active materials to pass the test, and thus the safety of lithium secondary batteries has become a problem.

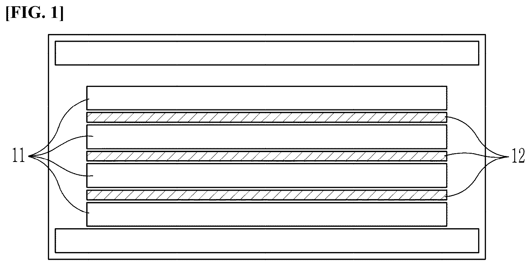

On the other hand, conventionally, when lithium secondary batteries are produced into modules or packs in order to increase this safety, a technique has been developed in which a thermal insulator 12 is applied between secondary batteries 11, or similarly, a thermal insulator is applied between modules as shown in FIG. 1.

However, as the capacity and energy density of the unit lithium secondary battery itself increase, the explosive power of a single lithium secondary battery also increases, and thus it is not easy to pass the thermal transfer test even in modules and packs. In other words, the safety of lithium secondary batteries has still become a problem.

Therefore, there is a need to develop a technology that can solve these problems from the unit of lithium secondary batteries.

### [DETAILED DESCRIPTION OF THE INVENTION]

### [Technical Problem]

It is an object of the present disclosure to provide a secondary battery that can suppress thermal transfer even in the secondary battery unit when a thermal runaway or ignition problem occurs, thereby reducing the capacity of the secondary battery, which is the starting point for thermal runaway or ignition, and improving safety issues caused by thermal transfer.

### [Technical Solution]

According to an embodiment of the present disclosure, there is provided a secondary battery comprising: an electrode assembly containing a positive electrode, a negative electrode and a separator, and an electrolyte,
wherein the electrode assembly includes two or more unit cells, and one or more thermal insulators, and
wherein one or more of the one or more thermal insulators are located between the two or more unit cells.

Herein, each of the two or more unit cells may include one or more electrodes selected from a group consisting of a positive electrode and a negative electrode, and a separator. Specifically, each of the two or more unit cells may be a mono-cell including either a positive electrode or a negative electrode, and a separator, a bi-cell stacked so that electrodes having the same polarity are located at both ends, or a full-cell stacked so that electrodes having different polarities are located at both ends.

Meanwhile, one or more of the one or more thermal insulators may be located in a middle part based on the stacking direction of the electrode assembly.

In one specific embodiment, the one or more thermal insulators may be included by one or more and five or less, and specifically, by one or two.

At this time, it is preferable that the one or more thermal insulators are uniformly arranged, so that when the number of the one or more thermal insulators is an odd number, they can be located so as to be uniformly arranged between the unit cells facing each other, including the middle part, based on the stacking direction of the electrode assembly, and when the number of the one or more insulators is an even number, the thermal insulators can be located so as to be uniformly arranged between the unit cells facing each other.

Further, the area of each of the one or more thermal insulators may be 100% to 110% of the area of the negative electrode, and specifically, the one or more thermal insulators may be located in the form of entirely covering the facing electrodes, and more specifically, they may be located in the form of covering a part of the tab protruding from the facing electrodes.

Moreover, the thickness of each of the one or more thermal insulators may be 0.1 mm to 5 mm, specifically 0.2 mm to 2 mm.

Each of the one or more thermal insulators may include a porous Si foam, silica aerogel, or a non-combustible resin containing glass fiber, and specifically, silica aerogel.

### [BRIEF DESCRIPTION OF THE DRAWING]

FIG. 1 is a schematic cross-sectional view of a conventional battery module.
FIG. 2 is a schematic cross-sectional view of a secondary battery according to an embodiment of the present disclosure.
FIG. 3 is a schematic cross-sectional view of a secondary battery according to another embodiment of the present disclosure.
FIG. 4 is a partially exploded schematic diagram of an electrode assembly for showing the position of a thermal insulator according to an embodiment of the present disclosure.
FIG. 5 is a partial top view of an electrode assembly according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Throughout the descriptions herein, terms such as "about," "approximately," and "substantially" are used to describe a range of numerical values or a degree, or a close meaning thereto in consideration of an inherent manufacturing and material tolerances, and are intended to prevent infringers from unfairly taking advantage of the present disclosure that describes precise or absolute numerical values to aid the understanding of the present disclosure.

The "area", "length", "thickness", and "width" as used herein are based on those defined herein.

According to an embodiment of the present disclosure, there is provided a secondary battery comprising: an electrode assembly containing a positive electrode, a negative electrode and a separator, and an electrolyte,
wherein the electrode assembly includes two or more unit cells, and one or more thermal insulators, and
wherein one or more of the one or more thermal insulators are located between the two or more unit cells.

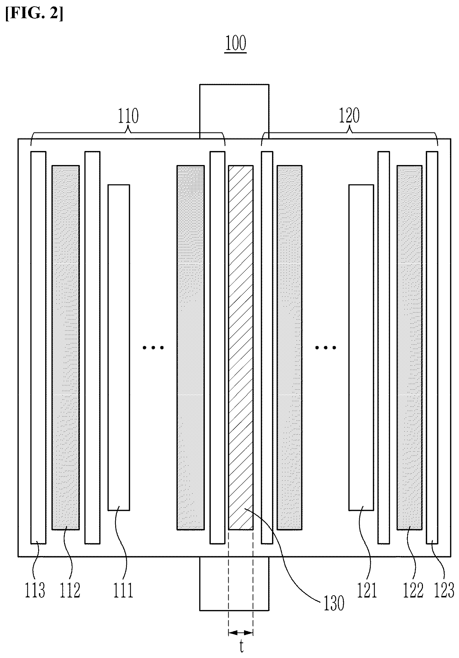

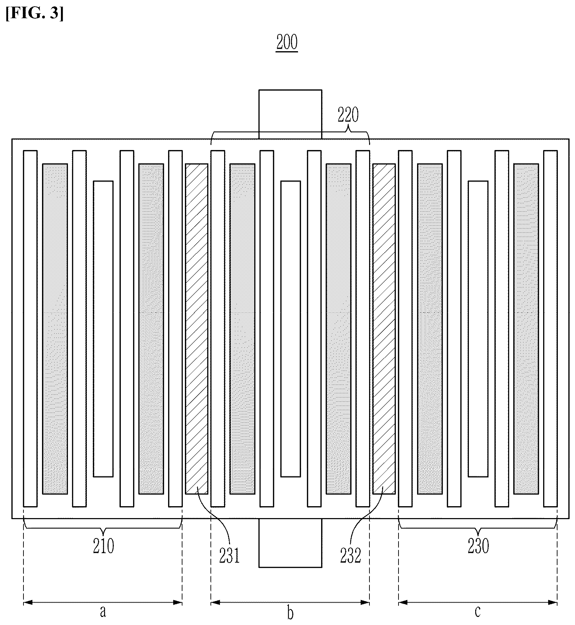

FIG. 2 schematically shows a cross-sectional view of a secondary battery 100 according to an embodiment of the present disclosure, and FIG. 3 schematically shows a cross-sectional view of a secondary battery 200 according to another embodiment.

Referring to FIG. 2, the secondary battery 100 includes an electrode assembly containing two unit cells 110 and 120 and one thermal insulator 130, and an electrolyte (not shown), wherein the thermal insulator 130 is located between the unit cells 110 and 120.

In FIG. 2, an electrode assembly containing two unit cells 110 and 120 and one thermal insulator 130 is shown, but this is not limited, and may have a structure including two or more unit cells and one or more thermal insulators. As another example, referring to FIG. 3, a secondary battery 200 may have a structure that includes an electrode assembly containing three unit cells 210, 220 and 230 and two thermal insulators 231 and 232, and an electrolyte (not shown), or may include more than that.

However, for convenience of explanation, a configuration containing one thermal insulator is shown in FIG. 2, and a configuration containing two thermal insulators is shown in FIG. 3, and the explanation will be given by referring to this.

Meanwhile, each of these unit cells may have a structure that includes one or more electrodes selected from a group consisting of a positive electrode and a negative electrode, and a separator.

Specifically, each of the two or more unit cells may be a mono-cell including either a positive electrode or a negative electrode, and a separator, a bi-cell stacked so that electrodes having the same polarity are located at both ends, or a full-cell stacked so that electrodes having different polarities are located at both ends.

At this time, the number of electrodes and separators stacked in one unit cell is not limited.

Referring again to FIG. 2, each of the unit cells 110 and 120 may include positive electrodes 111 and 121, negative electrodes 112 and 122, and separators 113 and 123, and may be a bi-cell stacked so that negative electrodes 112 and 122 are located at both ends.

Of course, the drawing shows that one unit cell 110 or 120 is located on both sides of the thermal insulator 130 as a reference, but this is divided for convenience of explanation, and may have a structure in which two or more unit cells are stacked on one side of the thermal insulator 130 as a reference. In other words, it may have a structure in which one or more unit cells selected from the group consisting of mono-cell, bi-cell, and full-cell are stacked on one side of the thermal insulator 130 as a reference.

Meanwhile, the thermal insulator, which is another component, may be included by one or more, and in detail, it may be included by one or more and five or less.

If the thermal insulator is included by more than five and outside the above range, the thermal insulating effect may increase, but the energy density may decrease based on the entire volume of the secondary battery, and the cost and total volume may increase, which is not preferable.

Considering the above problems, more specifically, one or two thermal insulators may be included in the secondary battery.

Thus, in the present disclosure, FIGS. 2 and 3, which include one or two thermal insulators, are intensively described, but they are not limited thereto, and are representative of cases where an odd number or an even number of thermal insulators are included.

Referring to FIG. 2, the secondary battery 100 includes one thermal insulator 130, that is, an odd number of thermal insulators 130.

At this time, the thermal insulator 130 is located in a middle part based on the stacking direction of the electrode assembly. Here, the middle part refers to the degree where the number of electrodes differs by one or two from the same number of electrodes and separators being located on both sides of the thermal insulator 130 based on the stacking direction of the electrode assembly.

When the thermal insulator 130 is located in the middle part in this way, the capacity of the secondary battery participating in the reaction during thermal runaway or ignition can be reduced by half, which is more effective in suppressing thermal transfer.

Meanwhile, when the thermal insulator is included by three or more and an odd number, it can be located so as to be uniformly arranged between the unit cells facing each other, including the middle part.

The uniform arrangement is described with reference to FIG. 3, which shows a diagram including two thermal insulators.

Referring to FIG. 3, the secondary battery 200 includes two thermal insulators 231 and 232, that is, an even number of thermal insulators, and each of these two thermal insulators 231 and 232 is located between the unit cells 210, 220 and 230.

At this time, the thermal insulators 231 and 232 are respectively located so as to be uniformly arranged between the unit cells 210, 220 and 230 facing each other. That is, each of the thermal insulators 231 and 232 can be formed with the same spacing b between them. Furthermore, the secondary battery may be equally divided into three parts (a=b=c) based on the stacking direction of the electrode assembly, with thermal insulators 231 and 232 being included between them.

That is, if thermal runaway, ignition, etc. occurs in the secondary battery, it is preferable that the thermal insulators reduces their capacity as much as possible to prevent thermal transfer, and thus it is preferable that the thermal insulators are located in the equally divided parts and have a capacity of 1/n.

Therefore, when an odd number of thermal insulators are included, it is preferable that at least one thermal insulator is located in the middle part.

Furthermore, it is preferable that the thermal insulator is capable of playing its role even if thermal runaway or ignition occurs anywhere in the component. Generally, thermal runaway or ignition in a secondary battery is caused by short circuit between the positive electrode and the negative electrode, oxygen generation due to side reactions between the positive electrode and the negative electrode, lithium dendrite formation at the negative electrode, etc., and thus it is preferable that it be formed with an area that can prevent these.

In this case, since the negative electrode is generally produced to be larger than the positive electrode, it is preferable that the thermal insulator has an area of 100% to 120%, more specifically, 100% to 110%, of the area of the negative electrode.

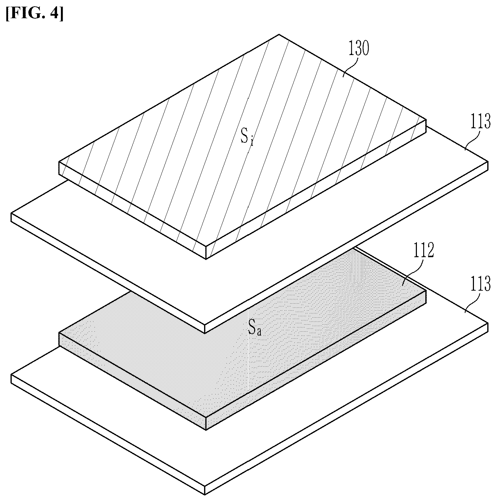

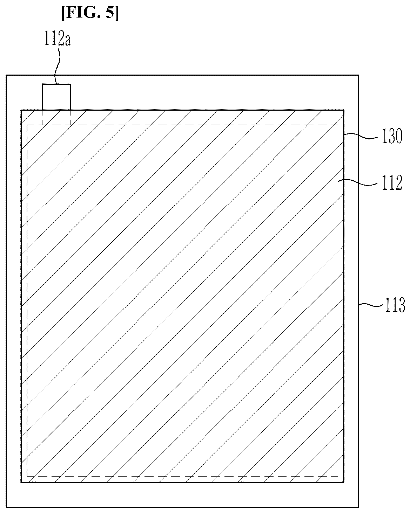

To explain this more specifically, FIG. 4 shows a partially exploded perspective view of a secondary battery 100, and FIG. 5 shows a top view of a part of the secondary battery 100.

Referring to FIGS. 4 and 5, the area Si of the thermal insulator 130 may be equal to or larger than the area Sa of the negative electrode 112 facing the separator 113, and may be located in the form of entirely covering the electrode. That is, if the thermal insulator has the same area (Si=Sa) as the negative electrode 112, it may be located so as to entirely cover the portion except for the tab 112a of the negative electrode 112, and if the thermal insulator has a larger area, it may be located so as to cover the whole of the negative electrode 112 and a part of the tab 112a of the negative electrode 112.

If the area of the thermal insulator is outside the above range and smaller than the negative electrode, problems such as short circuits occurring at the negative electrode end part cannot be effectively prevented, and thermal transfer may occur through the end part. If the thermal insulator is too wide, there are problems such as an increase in overall volume and an increase in production costs, so it is preferable to satisfy the above range.

Furthermore, referring again to FIG. 2, the thickness t of the thermal insulator 130 may be 0.1 mm to 5 mm, specifically 0.1 mm to 2 mm, and more specifically 0.1 mm to 1 mm.

If the thermal insulator is too thick and outside the above range, it may increase the overall volume of the secondary battery, and if the thermal insulator is too thin, the thermal insulating effect intended by the present disclosure cannot be effectively obtained, which is not preferable.

Such thermal insulators each may include a porous Si foam, silica aerogel, or a non-combustible resin containing glass fiber. Specifically, the thermal insulators may include silica aerogel, and more specifically, may consist of it.

In this case, the porous Si foam may have a porosity of 50% to 95% by volume, specifically, 60% to 90% by volume. In addition, the average diameter of the pores may be about 100 nm to 100µm, specifically, 500 nm to 10µm.

The porosity of the porous Si foam may be measured using AUTOSORB iQ series (manufactured by Quantachrome) according to ASTM D4641, and the average diameter of the pores was measured by magnifying the sample surface by 2,500 times using a scanning electron microscope (FE-SEM) (Hitachi S-4800 Scanning Electron Microscope), and then the major axis length of the surface pores confirmed in a randomly sampled range (10 um or more in width and 15 um or more in length) in the measured image was measured as the pore size. The number of measurements is at least 10 or more, and the average value of the pore sizes obtained after the measurements is calculated.

Such a porous Si foam can be produced by foaming silicon(Si), and is not limited as long as it is produced by a conventionally known method.

The silica aerogel is a highly porous solid material and has an irregular network structure. Here, the porosity of the silica aerogel may be 90% by volume to 99.9% by volume, specifically 95% by volume to 99.9% by volume, and more specifically 97% by volume to 99% by volume.

Further, the average diameter of these pores may be 1 nm to 100 nm, specifically 5 nm to 50 nm, and more specifically 5 nm to 10 nm.

At this time, the porosity and average pore diameter of the silica aerogel can be analyzed by the nitrogen sorption/desorption amount according to the partial pressure (0.11<p/po<1) using Micrometrics ASAP 2010 device.

The method for producing the silica aerogel may include a method of drying and forming under supercritical conditions using the sol-gel method, and is not limited as long as it is a production method known in the art.

The non-combustible resin containing the glass fiber is in the form of coating the non-combustible resin on the glass fiber reinforcing material, wherein the non-combustible resin and the glass fiber can be included in a weight ratio of 30:70 to 80:20, and specifically, can be included in a weight ratio of 40:60 to 70:30.

Herein, the non-flammable resin may be at least one selected from the group consisting of polyester, polyamide, polyether sulfone, polyetherimide, polyimide, polyamideimide, polyamide siloxane, polyurethane, polystyrene, polycarbonate, and polymethyl methacrylate.

The thermal conductivity of such a thermal insulator may be, for example, 0.02 to 0.5 W/m·K, specifically 0.03 to 0.1 W/m·K, and more specifically 0.04 to 0.07 W/m·K.

If the thermal conductivity is greater than the above range, sufficient thermal insulating effect cannot be obtained.

At this time, the thermal conductivity was evaluated according to the ISO 2207-2 standard of the TPS Hot Disk method. In this case, the measurement model may be TPS 3500.

Meanwhile, as other components of the secondary battery, the positive electrode may have a structure including a positive electrode current collector and a positive electrode active material layer formed on one side or both sides of the positive electrode current collector.

Herein, the positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with one of carbon, nickel, titanium, silver, or the like may be used.

The positive electrode current collector may have a thickness of 3µm to 500µm, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode active material layer may include a positive electrode active material, and optionally, a conductive material, a binder, and other additives.

The positive electrode active material is not limited as long as it is a compound capable of reversible intercalation and deintercalation of lithium, wherein the positive electrode active material may specifically include a lithium metal oxide including lithium and at least one metal such as cobalt, manganese, nickel, or aluminum. More specifically, the positive electrode active material may include a nickel-based lithium transition metal oxide represented by the following Chemical Formula 1.

[Chemical Formula 1] Li₁₊ₓNiₐCo_{b}Mn_{c}M_{1-(a+b+c)}O₂

wherein,
M is at least one selected from the group consisting of Al, Fe, V, Cr, Ti, Ta, Mg, and Mo, and
0 ≤ x ≤ 0.5, 0.6 ≤ a<1, 0<b<0.4, 0<c<0.4

In addition, the positive electrode active material is a lithium metal oxide, which may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li_{1+x'}Ni_{1-Y}Mn_{Y}O₂(where -0.5≤x'≤0.5, 0<Y<1), Li_{1+x"} Mn_{2-Z}Ni_{Z}O₄(where -0.5≤x"≤0.5, 0 < Z < 2), etc.), lithium-nickel-cobalt-based oxide (e.g., Li_{1+x‴}Ni_{1-Y1}Co_{Y1}O₂(where -0.5≤x‴≤0.5, 0<Y1<1), etc.), lithium-manganese-cobalt-based oxide (e.g., Li_{1+xʺʺ}Co_{1-Y2}Mn_{Y2}O₂(where, -0.5≤xʺʺ≤0.5, 0<Y2<1), Li_{1+x‴ʺ}Mn_{2-Z1}Co_{Z1}O₄(where -0.5≤x‴ʺ≤0.5, 0 < Z1 < 2), etc.), lithium-nickel-manganese-cobalt-based oxide (e.g., Li₁₊ₐ₁(NiₚCo_{q}Mnᵣ)O₂(where -0.5≤a1≤0.5, 0 < p < 1, 0 < q < 1, 0 < r < 1, p+q+r=1) or Li₁₊ₐ₂(Niₚ₁Co_{q1}Mnᵣ₁)O₄ (where -0.5≤a2≤0.5, 0 < p1 < 2, 0 < q1 < 2, 0 < r1 < 2, p1+q1+r1=2), etc.), or lithium-nickel-cobalt-transition metal(M) oxide (e.g., Li₁₊ₐ₃(Niₚ₂Co_{q2}Mnᵣ₂Mₛ₂)O₂ (where M is selected from the group consisting of Al, Fe, V, Cr, Ti, Ta, Mg and Mo, and a3, p2, q2, r2 and s2 are atomic fractions of each independent elements, wherein -0.5≤a3≤0.5, 0 < p2 < 1, 0 < q2 < 1, 0 < r2 < 1, 0 < s2 < 1, p2+q2+r2+s2=1), etc.), lithium iron phosphate (e.g., Li₁₊ₐ₄Fe₁₋ₚ₃Mₚ₃(PO_{4-b4})X_{b4} (where M is at least one selected from Al, Mg, and Ti, X is at least one selected from F, S, and N, and -0.5≤a4≤0.5, 0≤p3≤0.5, 0≤b4≤0.1), and any one thereof or a compound of two or more thereof may be included.

The positive electrode active material may be included in an amount of 60 to 98 wt.%, preferably 80 to 98 wt.%, and more preferably 90 to 98 wt.%, based on the total weight of the positive electrode active material layer.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be contained in an amount of 0.1 to 20 wt.%, specifically 0.5 to 10 wt.%, and more specifically 0.5 to 5 wt.%, based on the total weight of the positive electrode active material layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20 wt.%, specifically 0.5 to 10 wt.%, and more specifically 0.5 to 5 wt.% based on the total weight of the positive electrode active material layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

A negative electrode may have a structure which includes negative electrode current collector, and a negative electrode active material layer containing a negative electrode active material formed on one side or both sides of the negative electrode current collector, and the negative electrode active material layer may, in addition to the negative electrode active material, further include electrode materials such as a conductive material and a binder as described in the positive electrode.

The negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, silver, or the like, an aluminum-cadmium alloy, or the like.

The negative electrode current collector may typically have a thickness of 3µm to 500µm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material layer may include at least one selected from the group consisting of a lithium metal, a carbon material capable of reversible intercalation/deintercalation of lithium ions, metals or alloys of lithium and these metals, a metal composite oxide, a material capable of doping and de-doping lithium, and a transition metal oxide.

As the carbon material capable of reversible intercalation/deintercalation of lithium ions, any carbon material may be used without particular limitation so long as it is a carbon-based negative electrode active material generally used in a lithium ion secondary battery, and, as a representative example thereof, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, fired cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LixFe₂O₃(where 0 ≤ x ≤ 1), LiₓWO₂(where 0 ≤ x ≤ 1) and SnₓMe₁₋ₓMe'_{y}O_{z} (where Me: Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Si, SiOₓ(0<x≤2), Si-Y alloy (where Y is an element selected from the group consisting of an alkali metal, an alkaline earth metal, a Group 13 element, a Group 14 element, a transition metal, a rare earth element, and a combination thereof, and is not Si), Sn, SnO₂, Sn-Y (where Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The negative electrode active material may be included in an amount of 60 to 99 wt.%, preferably 80 to 99 wt.%, and more preferably 90 to 98 wt.%, based on the total weight of the negative electrode active material layer.

When the metal itself is used without forming a negative electrode mixture layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal joined/rolled/deposited on the metal thin film itself or the negative electrode current collector may include one type of metal selected from the group consisting of lithium(Li), nickel(Ni), tin(Sn), copper(Cu), and indium(In), or an alloy of two types thereof.

The separator can be used without particular limitation as long as it is commonly used as a separator in a lithium secondary battery, and those having an excellent electrolyte liquid moisture-containing ability while having low resistance against ion migration of the electrolyte liquid are particularly preferred.

For example, as the separator, a porous polymer film including a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a typical porous nonwoven fabric, for example, a nonwoven fabric made of a glass fiber having a high melting point, a polyethylene terephthalate fiber or the like can also be used as the separator.

Alternatively, it may be an SRS(Safety Reinforced Separator) having a structure in which a coating layer containing a binding material and inorganic particles is formed on one side or both sides of the polymer substrate as described above.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. For example, the lithium salt may include Li⁺ as a cation, and may include at least one selected from the group consisting of F⁻, Cl⁻, Br⁻, I⁻, NO3⁻, N(CN)2⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂) or a mixture of two or more, but in terms of excellent stability, it is preferable to include Li(N(SO₂CF₃)₂.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like in the charge/discharge process of the lithium secondary battery, and may exhibit desired characteristics together with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate(PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, an electrolyte having high electrical conductivity may be prepared, which may be more preferably used.

Moreover, the lithium non-aqueous electrolyte may further include a functional additive, and the functional additive may be included to prevent the negative electrode from decomposing in a high power environment and causing negative electrode collapse, or to further improve the low temperature high rate discharge characteristics, high temperature stability, overcharge prevention, battery expansion suppression effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and specifically 1 wt.% to 5 wt.% based on the total weight of the electrolyte. In a case in which the amount of the sultone-based compound in the electrolyte is greater than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the electrolyte.

Further, the halogen-substituted carbonate-based compound may include fluoroethylene carbonate(FEC), and may be included in an amount of 5 wt.% or less based on the total weight of the electrolyte. In a case in which the amount of the halogen-substituted carbonate-based compound in the electrolyte is greater than 5 wt.%, the cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. If the content of the cyclic carbonate-based compound in the electrolyte is greater than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate(LiB(C₂O₄)₂), and LiBF₄, and may be included in an amount of 3 wt.% or less based on the total weight of the electrolyte.

Two or more kinds of the functional additives may be mixed, and included in an amount of 20 wt.% or less, specifically 0.1 wt.% to 10 wt.%, based on the total weight of the lithium non-aqueous electrolyte. If the content of the functional additive is greater than 20 wt.%, there is a possibility that excessive side reactions in the lithium non-aqueous electrolyte may occur during charge and discharge of the battery. In particular, it is not sufficiently decomposed at high temperatures, and may exist as an unreacted material or in a precipitated state in the lithium non-aqueous electrolyte at room temperature. Thereby, side reactions may occur in which the lifetime or resistance characteristics of the lithium metal battery are reduced.

### <Example 1>

LiNi_{0.8}Co_{0.1}Mn_{0.1}O₂ as a positive electrode active material, carbon black as a conductive material, and PVdF as a binder were mixed in a weight ratio of 94:3:3 in NMP to prepare a slurry, and then the slurry was coated on both sides of a 20µm thick Al current collector to a thickness of 70µm and dried, and rolled to a total positive electrode thickness of 120µm to produce a positive electrode.

Natural graphite as a negative electrode active material, carbon black as a conductive material, styrene-butadiene rubber(SBR) as a binder, and carboxymethyl cellulose(CMC) as a thickener were mixed at a weight ratio of 95: 1: 3: 1 in water to produce a slurry, and then the slurry was coated on both sides of a 10 µm thick Cu current collector to a thickness of 90µm and dried, and rolled to a total negative electrode thickness of 130µm to produce a negative electrode.

In addition, an SRS separator (coating layer of Al₂O₃ and PVdF mixed in a weight ratio of 80:20 was formed on both sides of a 15µm thick polypropylene substrate to a thickness of 5µm each) was prepared as a separator.

The separator/negative electrode/separator/positive electrode were stacked and laminated using the positive electrode, the negative electrode and the separator to produce a unit cell. After stacking 15 such unit cells, a unit cell made of separator/negative electrode/separator was further stacked, and then a negative electrode-sized thermal insulator 1 (porous Si foam, thickness: 3 mm, 0.07 W/m-K) was stacked thereon. Then, 15 separator/negative electrode/separator/positive electrode unit cells and one separator/negative electrode/separator unit cell were stacked again, and then the outside of the electrode assembly was taped with PET tape.

The electrode assembly thus prepared was embedded together with an electrolyte in a pouch case and sealed to produce a secondary battery.

At this time, the electrolyte used was an electrolyte in which LiPF₆ was dissolved to a concentration of 1.0 M in a non-aqueous organic solvent having a composition of ethylene carbonate(EC): ethyl methyl carbonate(EMC) = 30: 70 (volume ratio), and vinylene carbonate (VC) was incorporated at 3 wt.%.

The battery was charged at 0.1C for 3 hours, activated at SOC of 30%, subjected to aging and degassing, and then charged at 0.33C to 4.2 V (SOC 100%) under a CC/CV condition.

### <Example 2>

A secondary battery was produced in the same manner as in Example 1, except that a negative electrode-sized thermal insulator 2 (silica aerogel, thickness: 1 mm, 0.04-0.05 W/m·K) was used as a thermal insulator in Example 1.

### <Example 3>

A secondary battery was produced in the same manner as in Example 1, except that the negative electrode-sized thermal insulator 3 (glass fiber + polyamide resin (50:50 wt.%), thickness: 0.2 mm, 0.05 W/m-K) was used as the thermal insulator in Example 1.

### <Comparative Example 1>

A secondary battery was produced in the same manner as in Example 1, except that in Example 1, a negative electrode-sized thermal insulator 2 (silica aerogel, thickness: 1 mm, 0.04-0.05 W/m·K) was used as a thermal insulator, and 15 separator/negative electrode/separator/positive electrode unit cells, one separator/ negative electrode/separator unit cell, again 15 separator/ negative electrode/separator/positive electrode unit cells, and one separator/ negative electrode/separator unit cell were sequentially stacked to prepare an electrode assembly, and the thermal insulator 2 was located between the electrode assembly and the pouch case.

### <Comparative Example 2>

A secondary battery was produced in the same manner as in Example 1, except that in Example 1, the thermal insulator 1 was not inserted.

### <Experimental Example 1>

Thermocouples were respectively attached to the central part of the flat surface of the secondary batteries produced in Example 1, and a stacked cell was produced so that four secondary batteries were stacked with double-sided tape, and then a heater (120 mm x 60 mm) was placed on the 1st secondary battery. The thermocouple was attached between the 0 heater and the 1st secondary battery, and the heater was fixed with PI tape. 10T superwool thermal insulator (600 mm x 80 mm) was inserted into the lower plate of the modular simulation jig, and then the stacked cell was placed inside the modular simulation jig, and 10T superwool thermal insulator (600 mm x 80 mm) was inserted between the stacked cell and the jig, and then a gasket was placed on the lower plate of the jig, and the upper plate of the jig was fastened with bolts and nuts.

A thermal transfer test was conducted by heating the heater at a rate of 5°C/sec and causing thermal runaway of the 1st secondary battery. The voltage of the secondary batteries was measured using a data logger, and the time taken from the point where the 1st secondary battery reached V=0 to the point where the 4th secondary battery reached V=0 was measured, and the results are shown in Table 1 below.

The secondary batteries produced in Examples 2 to 3 and Comparative Examples 1 to 2 were also subjected to the above-mentioned tests.

**[Table 1]**

| | Thermal transfer test (time) |
|---|---|
| Example 1 | 1 minutes 52 seconds |
| Example 2 | 6 minutes 34 seconds |
| Example 3 | 2 minutes |
| Comparative Example 1 | 2 minutes 47 seconds |
| Comparative Example 2 | 49 seconds |

Reviewing Table 1 above, it can be confirmed that when a thermal insulator is applied to the inside of the secondary battery as in the present disclosure, the thermal transfer is slower that in Comparative Example 2 where no thermal insulator is applied to the inside of the secondary battery.

On the other hand, with reference to Example 2 and Comparative Example 1 using the thermal insulator made of the same material, it can be confirmed that when the thermal insulator is applied to the middle part of the electrode assembly, it is possible to suppress the thermal transfer more excellently compared to when the thermal insulator is applied to the outside.

In addition, it can be confirmed that, as compared with porous silicone foam, thermal insulators prepared by combining silica aerogel or glass fiber and non-flammable resin have a better thermal insulating effect relative to thickness. Of course, it can be seen that the combination of glass fiber and non-combustible resin has low thermal conductivity, and thus the thickness can be reduced, but the thermal insulating effect also decreases as the thickness decreases. Therefore, it can be seen that when using a thermal insulator made of silica aerogel to a thickness of about 1 mm, the thermal transfer delaying effect is the most excellent without a large decrease in energy density

Although preferred embodiments of the present disclosure have been described in detail above with reference to the accompanying drawings, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

11: electrode
12: thermal insulator
100, 200: secondary battery
110, 120, 210, 220, 230: unit cell
130, 231, 232: thermal insulator

### [Industrial Applicability]

According to the present disclosure, the secondary battery of the present invention has one or more thermal insulators inserted therein, which has the effect of suppressing thermal transfer within the secondary battery, and further, the one or more thermal insulators are located between two or more unit cells, whereby even if thermal runaway or ignition occurs within the secondary battery due to the inserted thermal insulators, it is possible to prevent thermal transfer between unit cells even in a single secondary battery, and reduce the capacity at which thermal runaway or ignition occurs, which is effective in reducing the explosive force and further improving safety.

## Claims

1. A secondary battery comprising: an electrode assembly containing a positive electrode, a negative electrode and a separator, and an electrolyte,
wherein the electrode assembly includes two or more unit cells, and one or more thermal insulators, and
wherein one or more of the one or more thermal insulators are located between the two or more unit cells.

2. The secondary battery according to claim 1,
wherein each of the two or more unit cells includes one or more electrodes selected from a group consisting of a positive electrode and a negative electrode, and a separator.

3. The secondary battery according to claim 2,
wherein each of the two or more unit cells is a mono-cell including either a positive electrode or a negative electrode, and a separator, a bi-cell stacked so that electrodes having the same polarity are located at both ends, or a full-cell stacked so that electrodes having different polarities are located at both ends.

4. The secondary battery according to claim 1,
wherein one or more of the one or more thermal insulators are located in a middle part based on the stacking direction of the electrode assembly.

5. The secondary battery according to claim 1,
wherein the one or more thermal insulators are included by 5 or less.

6. The secondary battery according to claim 1,
wherein when the number of the one or more thermal insulators is an odd number, the thermal insulators are located so as to be uniformly arranged between the unit cells facing each other, including the middle part, based on the stacking direction of the electrode assembly.

7. The secondary battery according to claim 1,
wherein when the number of the one or more thermal insulators is an even number, the thermal insulators are located so as to be uniformly arranged between the unit cells facing each other.

8. The secondary battery according to claim 1,
wherein the one or more thermal insulators are included by one or two.

9. The secondary battery according to claim 1,
wherein an area of each of the one or more thermal insulators is 100% to 110% of an area of the negative electrode.

10. The secondary battery according to claim 1,
wherein the one or more thermal insulators are located in the form of entirely covering the facing electrodes.

11. The secondary battery according to claim 10,
wherein the one or more thermal insulators are located in the form of covering a part of a tab protruding from the facing electrodes.

12. The secondary battery according to claim 1,
wherein a thickness of each of the one or more thermal insulators is 0.1 mm to 5 mm.

13. The secondary battery according to claim 12,
wherein the thickness of each of the one or more thermal insulators is 0.1 mm to 2 mm.

14. The secondary battery according to claim 1,
wherein each of the one or more thermal insulators includes a porous Si foam, silica aerogel, or a non-combustible resin containing glass fiber.

15. The secondary battery according to claim 14,
wherein the one or more thermal insulators include silica aerogel.
